# EUROPEAN PATENT APPLICATION

(11) **EP 1 661 652 A1**
(43) Date of publication of application: **31.05.2006**
(21) Application number: 04028028.1
(22) Date of filing: 25.11.2004
(51) Int. Cl.: B23D 51/10

(54) **Saw blade holding device for reciprocating saw machine**

(71) Applicant: Jiangsu Golden Harbour Enterprise Ltd., Haian, Jiangsu (CN)
(72) Inventor: Wang, Shu, Nanjing Jiangsu (CN)
(74) Representative: Becker Kurig Straus

(57) **Abstract**

A saw holding device mounted on a driving shaft of a reciprocating saw machine to secure a saw (B) to the machine has a connector (10), a switch (20) and a spring (30). The connector (10) has a coupling portion (11) at an end thereof, a flange (12) at an end opposite to the coupling portion (11), a through hole (15) from a bottom of the coupling portion (11) to the end with the flange (12) and a recess (16) on a periphery thereof and communicated with the through hole (15). The switch (20) has a protrusion (21) at an end thereof and a handle (22) at an end opposite to the protrusion (21). The switch (20) is received in the recess (16) of the connector (10) and pivoted on the connector (10) and has the protrusion (21) in the through hole (15). The spring (30) is connected to the connector (10) and the switch (20) respectively.

## Description

### BACKGROUND OF THE INVENTION

### 1. Field of the Invention

The present invention relates generally to an electric band saw machine, and more particularly to a saw holding device of the band saw machine.

### 2. Description of the Related Art

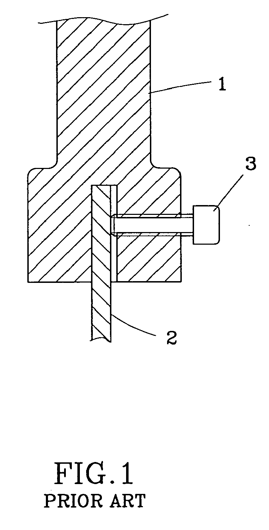

As shown in FIG. 1, a conventional band saw machine is composed of a base, a driving shaft 1 mounted on the base for reciprocation and a saw 2 mounted on the driving shaft 1. The saw 2 is reciprocated along with the driving shaft 1 for sawing. Typically, a bolt 3 is screwed to secure the saw 2 on the shaft 1. In the procedure of replacement of the saw, the screwdriver or other suitable tool is applied to loose and tighten the bolt 3 and that is inconvenient to user.

### SUMMARY OF THE INVENTION

The primary objective of the present invention is to provide a saw holding device of a band saw machine, which is convenient to user for replacement of the saw.

According to the objective of the present invention, a saw holding device, which is mounted on a driving shaft of a band saw machine to secure a saw to the machine, comprises a connector having a coupling portion at an end thereof, a flange at an end opposite to the coupling portion, a through hole from a bottom of the coupling portion to the end with the flange and a recess on a periphery thereof and communicated with the through hole, a switch having a protrusion at an end thereof, two tilting flats at opposite sides of the protrusion to make the driving being a convex portion of the switch and a handle at an end opposite to the protrusion, wherein the switch is received in the recess of the connector and pivoted on the connector, and a spring connected to the connector and the switch respectively.

### BRIEF DESCRIPTION OF THE DRAWINGS

FIG. 1 is a sectional view of the saw holding device of the conventional band saw machine;
FIG. 2 is an exploded view of a preferred embodiment of the present invention;
FIG. 3 is a sectional view of the preferred embodiment of the present invention, and
FIG. 4 is a bottom view of the preferred embodiment of the present invention.

### DETAILED DESCRIPTION OF THE INVENTION

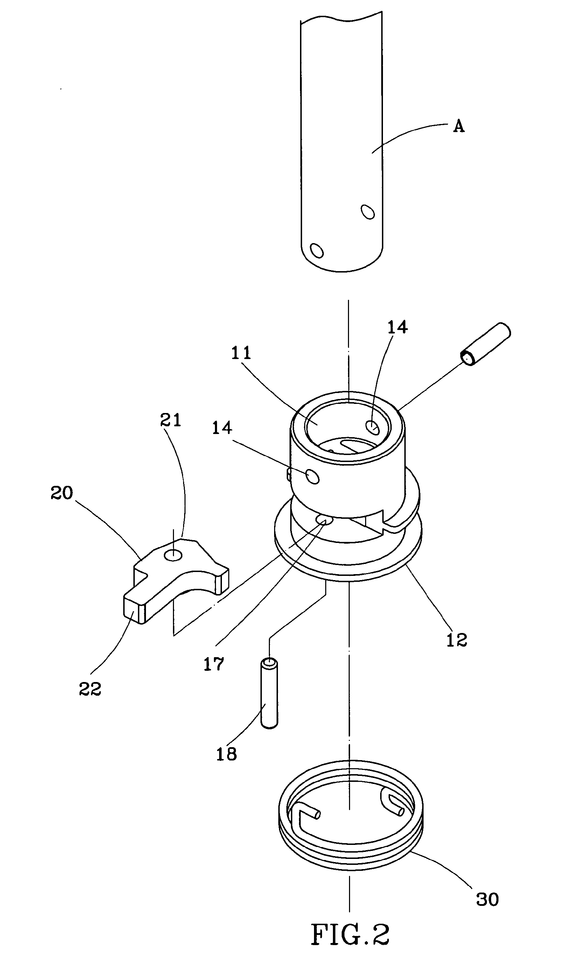

As shown in FIGS. from FIG. 2 to FIG. 5, a saw holding device of the preferred embodiment of the resent invention is mounted on a driving shaft A of a band saw machine to secure a saw onto the driving shaft A, which comprises:

A connector 10, which is a column in the present invention, has a coupling portion 11 at an end thereof to connect the driving shaft A and a flange 12 at an opposite end thereof. In the present preferred embodiment, the flange 12 has a gap 13 (FIG. 2) and the coupling portion 11 is a concave portion with two openings 14 on a sidewall thereof. A pin or a rivet is inserted into the openings 14 of the connector 10 and a hole on the driving shaft A to couple them together. The connector 10 is provided with a through hole 15 from a bottom of the coupling portion 11 to the end with the flange 12 and a recess 16 on a periphery thereof communicated with the through hole 15. The connector 10 further has two holes 17 on top and bottom walls of the recess 16 and a post 18 is inserted into both of the holes 17.

A switch 20 has a protrusion 21 at an end thereof and a hole to insert the post 18 thereto. The switch 20 further has two tilting flats at opposite sides of the protrusion 21, which a distance between the hole and the protrusion 21 is greater than distances between the hole and the tilting flats. In other words, the protrusion 21 is the convex portion of the switch 20. The switch 20 has a handle 22 at an end opposite to the protrusion 21. The switch 20 is received in the recess 16 of the connector 10 but left the handle 22 out and the post 18 is inserted into the hole of the switch 20 to pivot the switch 20 on the connector 10 and the protrusion 21 is in the through hole 15.

A spring 30 has opposite ends hooking the gap 13 of the flange 12 and the handle 22 of the switch 20 respectively.

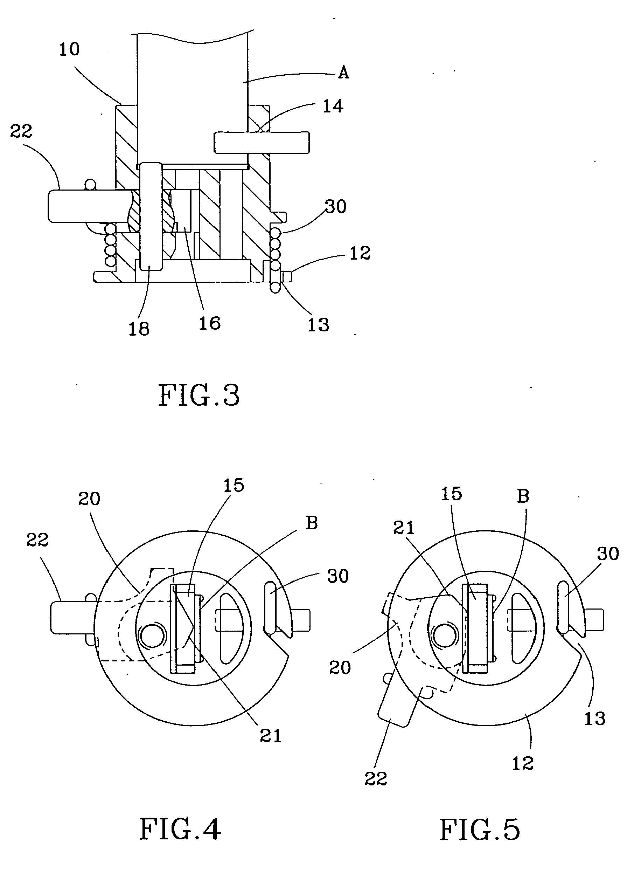

In operation, the switch 22 is rotated transversely to move the protrusion 21 off the through hole 15 and the switch 20 moves back to the initial position after release because of the spring 30, as shown in FIG. 5. To install the saw B onto the saw holding device of the present invention, the switch 20 is rotated counterclockwise and the saw B is inserted into the through hole 15, and then the switch 20 is released to make the protrusion 21 moving back into the through hole 15 and pressing the saw B for securing the saw B, as shown in FIG. 4. On the contrary, to disassemble the saw B, the switch 22 is rotated transversely to move the protrusion 21 off the through hole 15 so that the saw is able to be drawn out of the through hole 15, as shown in FIG. 5.

In conclusion, the saw holding device of the present invention serves the function of replacing the saw in an easier and faster way and no extra tool is needed in the procedure of replacement of saw.

## Claims

1. A saw holding device, which is mounted on a driving shaft of a band saw machine to secure a saw to the machine, comprising:
a connector having a coupling portion at an end thereof, a flange at an end opposite to the coupling portion, a through hole from a bottom of the coupling portion to the end with the flange and a recess on a periphery thereof and communicated with the through hole;
a switch having a protrusion at an end thereof, two tilting flats at opposite sides of the protrusion to make the driving being a convex portion of the switch and a handle at an end opposite to the protrusion, wherein the switch is received in the recess of the connector and pivoted on the connector, and
a spring connected to the connector and the switch respectively.

2. The saw holding device as defined in claim 1, wherein and the protrusion is moved into and out of the through hole while the switch is rotated.

3. The saw holding device as defined in claim 1, wherein the connector has a hole on opposite sides of the recess and a post inserted into the holes.

4. The saw holding device as defined in claim 3, wherein the post is inserted into a hole of the switch.

5. The saw holding device as defined in claim 3, wherein a distance between the post and the protrusion is different from distance between the tilting flats and the post.

6. The saw holding device as defined in claim 1, wherein the flange of the connector has a gap.

7. The saw holding device as defined in claim 6, wherein the spring has opposite ends hooking the gap of the flange and the handle of the switch.
